# EUROPEAN PATENT SPECIFICATION

(11) **EP 0 377 414 B1**
(45) Date of publication and mention of the grant of the patent: **05.05.1993**
(21) Application number: 89830005.8
(22) Date of filing: 05.01.1989
(51) Int. Cl.: A01K 1/01

(54) **Automatic self-cleaning dirt-box for pet animals**
Automatische selbstreinigende Strassentoilette für Haustiere
Toilette autonettoyante pour animaux familiers

(43) Date of publication of application: 11.07.1990
(73) Proprietor: Della Vedova, Piero, I-33100 Udine (IT)
(72) Inventor: Della Vedova, Piero, I-33100 Udine (IT)
(74) Representative: D'Agostini, Giovanni, Dr.

(56) References cited:
- GB-A- 1 316 202
- US-A- 3 791 348
- US-A- 4 098 229
- US-A- 4 502 413

## Description

The present invention relates to an automatic self-cleaning dirt-box for pet animals.

To avoid the house floor dirty by excrements or faeces of pet animals, different types of pet-animals dirt-box to contain absorbent granulate material, are well known.

This pet-animals dirt-box have a static function to receive the faeces of the pet animal, so bad smell is delivered in air and the non hygienic faeces remains discovered.

It is known that certain animals ( cats, dogs) themselves use to cover the respective faeces to avoid bed smell, but another disadvantage become out because the animal in covering the faeces disperse out the dirt-bow the granulate material, so the problem to conceive an hygienic solution remains open.

Pet-animal dirt-boxes comprising an openable cover have been disclosed.

Solutions having a cover openable by a person are not convenient because the person do not known when the pet animal needs to evacuate the bowel and his continuously presence with the animal is impossible.

Solutions having an automatic openable cover with the approaching of the pet animal to the dirt-box can be easily conceived for example utilizing a weight sensor plate with an articulation to open and close automatically the cover but the sealing not being in this case realizable do not solve the problem of the emanation of bed smell.

In any case all this solutions need the use of said granulate material involving a certain cost.

A further solution is disclosed in US-A-4098229 (HAYNES) in which is disclosed a selfcontained, portable animal commode including a base with a waste holding tank and a top pivoted to the base, the top including an end vertical panel, for satisfying a male dog's natural urinating instincts, and a platform underlying a movable belt upon which the animal stands to urinate and defecate. After the animal steps off the commode, the belt is rotated forwardly to deposit waste in the tank while, simultaneously, the end panel and belt are flushed of waste. Then the belt is reversely driven to its initial position, the belt being wiped clean when moved in both directions by:
- a first wiper blade (44) into the tank of chemical solution
- a second wiper blade (50) placed downwards the tank of chemical solution and before the defecation area belt-arrival.

This solution solves only a part of the problem because the solid escrements are difficult to wash, not being sufficient the movable belt wiped when moved, even if we have a wiper blade immersed in a liquid chemical solution.

Further the respective belt is always dirty being wetted by liquid chemical solution.

The invention as claimed is intended to remedy these drawbacks, allowing automatization of this service both in home service and public service.

This second one being particularly useful to avoid undesired escrement/fecal pollution along streets and sidewalks.

It solves the problem by an automatic self-cleaning dirt-box for pet animals comprising a defecation-place to receive the animal in which said defecation-place comprising:
- a faeces receiving surface, in the form of a continuous belt conveyor;
- a faeces container with evacuating means for the faeces and liquid,
- a mechanical excrement detaching means, to sweep the faeces receiving surface by relative movement between the faeces receiving surface and the respective detaching means,
- washing means to wash faeces from said faeces receiving surface,
- the arrangement being such that said relative movement is caused together with the respective washing action of said washing means,

characterized in that said detaching means comprises at least a detaching transversal wire which is applied to the said continuous belt conveyor on a descending direction portion of said belt conveyor placed downwards said faeces receiving surface, in order that said wire causes detachment of the faeces during washing, to cause the faeces to fall down into said faeces container.

In this way the faeces is effectively detached from the belt surface by the wire that causes the faeces to fall down in a separate faeces container (B) that does not contaminate furthermore the belt surface dawnwardly washed (C-A').

Examples of carrying out the invention are described in below with reference to drawings which illustrate an embodiment, in which:
- Figure 1 is a schematic view of a first embodiment of the invention particularly useful in home service, in which the defecation place is realized by a belt and the escrement detaching means is a wire.
- Figure 2 is a schematic view of the belt device with the wire omitted and the detaching means is a brush or sweep.

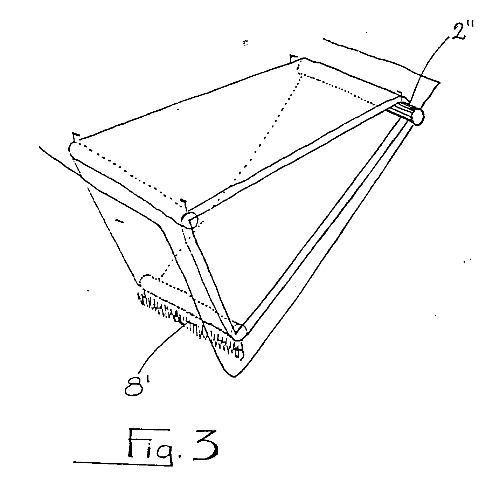

- Figure 3 is a schematic view of another embodiment of the belt device as per claim 2, again with the wire omitted.

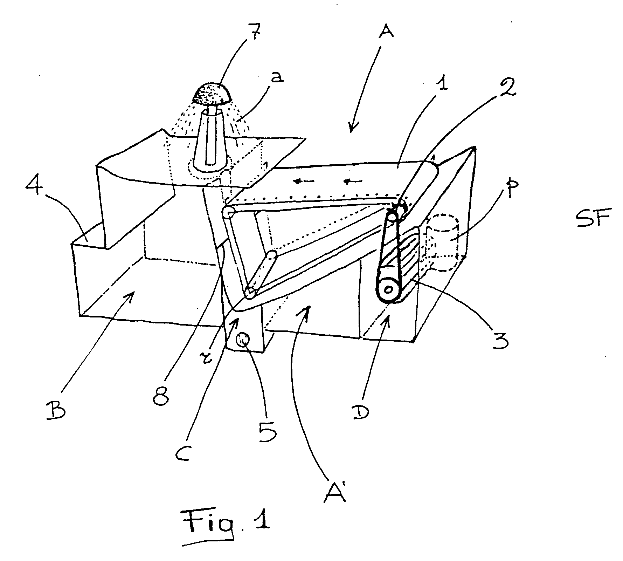

With reference to the Figure 1, the automatic self-cleaning dirt-box for pet animals (SF) comprises in a box (not illustrated):
- a clean water tank (A') under a pet-animal defecating place (faeces receiving surface A) realized by a three rolls tensioned continuous belt (1);
- a sewage or faeces container (B);
- an intermediate extractable sedimentations (residual solids) container (C),
- a separated dry chamber (D) containing:
   - motor and electric apparatuses (3) to rotate one driving roll (2) of said continuous belt (1)
   - water pump means (p) to pump water from washing container (A') to
- a washing device (7) for washing the apparatuses in cleaning action, being the water discharged in said sewage container (B). Be noted that a transverse wire (8) is applied in front on the rotating belt (1) to allow detachment of faeces falling it down in the sewage container (B).

To allow the animal to go up the apparatuses for defecation, a step (4) is provided.

Pet-animal presence sensor means can be provided to run the apparatus only after the animal has been gone out.

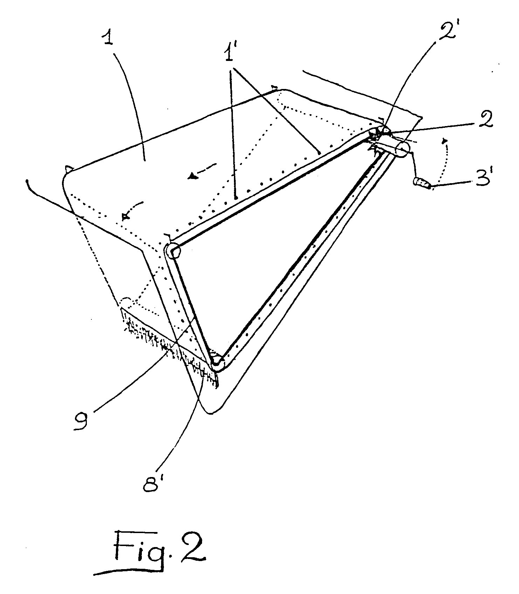

Of course operation of the belt end pumping action can be manual in simplified solutions (Eg. to see Fig.2).

To make more efficient the cleaning of the belt, a belt-brush (8') immersed in the water contained in the central intermediate container (C) can be provided, in this way the belt surface is better cleaned from the effective efficiency of the brush immersed in the water.

To move the belt, a gear (2') acting in belt-notches (1') can be provided (Fig.2).

Alternatively the respective belt (1) can be moved under tension of frame (9), utilizing a ruled (lined) roll (2'').

The belt is supported and tensioned by three rolls wherein one of it (r) is placed in lower position to be immersed in the water for washing the belt during its rotation.

Alternatively the cleaning apparatus and the respective tank (A') can be supplied by net-work water supply and the sewage tank (B) can be connected to a sewerage net-work.

## Claims

1. An automatic self-cleaning dirt-box for pet animals comprising a defection-place to receive the animal comprising:
- a faeces receiving surface, in the form of a continuous belt conveyor (1);
- a faeces container (B) with evacuating means for the faeces and liquid (a) ,
- a mechanical excrement detaching means, (8), to sweep the faeces receiving surface (1) by relative movement between the faeces receiving surface (1) and the respective detaching means (8)
- washing means (a-7,7',...) to wash faeces from said faeces receiving surface ,
- the arrangement being such that said relative movement is caused together with the respective washing action of said washing means (a-7...),
characterized in that said detaching means comprised at least a detaching transversal wire (8) which is applied to the said continuous belt conveyor (1) on a descending direction portion of said belt conveyor placed downwards said faeces receiving surface, in order that said wire causes detachment of the faeces during washing, to cause the faeces to fall down into said faeces container (B).

2. An automatic self-cleaning dirt-box for pet animals as claimed in claim 1., characterized in that:
- said belt conveyor (1) is supported by three rolling supporting means to form a triangular circuit, the three sides being:
. the first, extending generally horizontally, to constitute said faeces receiving surface and
. the second, said descending direction portion;
. the respectif down corner with respective roller (r) being immersed in an intermediate extractable container (C).

3. An automatic self-cleaning dirt-box for pet animals as claimed in claim 1., characterized in that:
- said continuous belt conveyor (1) further comprises brushing means (8') downwards said detaching transversal wire (8), to brush the surface of said belt (1) under its rotation, being said brushing means (8') immersed in washing liquid (C) of said intermediate extractable container (B).

4. An automatic self-cleaning dirt-box for pet animals as claimed in claim 1., characterized in that it comprises:
- a clean water tank (A') under said faeces receiving surface (A);
- and downwards said faeces container (B);
- an intermediate extractable sedimentations (residual solids) container (C),
- a separated dry chamber (D) containing:
- motor and electric apparatuses (3) to rotate one driving roll (2) of said continuous belt (1)
- water pump means (p) to pump water from washing container (A') to
- a washing device (7) placed over said faeces container (B).

## Patentansprüche

1. Automatische selbstreinigende Straßentoilette für Haustiere mit Kotierungsraum, der das Tier aufnehmen kann, mit:
- einer Kotaufnahmefläche in Form eines kontinuierlichen Förderbands (1);
- einem Kotbehälter (B) mit Leervorrichtung für Kot und Flüssigkeit (a);
- einer mechanischen Kotentfernungsvorrichtung (8) zum Abbürsten der Kotaufnahmefläche (1) durch eine relative Bewegung zwischen der Kotaufnahmefläche (1) und der Kotentfernungsvorrichtung (8);
- einer Waschvorrichtung (a-7,7'...) zum Abwaschen des Kotes von besagter Kotaufnahmefläche,
- wobei das Gerät so eingerichtet ist, daß die genannte relative Bewegung gleichzeitig mit dem Waschvorgang der besagten Waschvorrichtung (a-7...) ausgelöst wird,
gekennzeichnet dadurch, daß die genannte Entfernungsvorrichtung mindestens einen Querdraht zum Entfernen (8) umfaßt, der an dem kontinuierlichen Förderband (1) angebracht ist, und zwar an einem Teil in absteigender Richtung unterhalb des genannten Kotierungsraumes, so daß der Draht während des Waschens den Kot ablöst und letzterer in den besagten Kotbehälter (B) fällt.

2. Automatische selbstreinigende Straßentoilette für Haustiere wie nach Anspruch 1, gekennzeichnet dadurch, daß:
- besagtes Förderband (1) durch drei Stützrollen gestützt wird, die einen dreieckigen Kreislauf bilden, dessen drei Seiten gebildet werden aus:
. der ersten, die sich allgemein waagerecht erstreckt und die genannte Kotaufnahmefläche ausmacht,
. der zweiten, dem besagten Teil in absteigender Richtung, sowie
. der dritten nach unten führenden Seite mit den Rollen (r), die von einem herausziehbaren Behälter (C) umschlossen sind, der den Mittelteil des Geräts bildet.

3. Automatische selbstreinigende Straßentoilette für Haustiere wie nach Anspruch 1, gekennzeichnet dadurch, daß:
- besagtes Förderband (1) des weiteren eine Bürstvorrichtung (8') umfaßt, die unterhalb des genannten Querdrahts (8) gelegen ist, die Oberfläche des Förderbands (1) durch dessen Rotieren abbürstet und in eine Spülflüssigkeit (C) im Innern des genannten herausziehbaren Behälters (C) getaucht ist.

4. 3. Automatische selbstreinigende Straßentoilette für Haustiere wie nach Anspruch 1, gekennzeichnet dadurch, daß sie umfaßt:
- einen Frischwassertank (A') unter besagter Kotaufnahmefläche (A);
- unterhalb davon den genannten Kotbehälter (B);
- einen den Mittelteil bildenden herausziehbaren Behälter für Sedimente (feste Überreste) (C); sowie
- eine separate Trockenkammer (D) mit:
- Motor und elektrischen Apparaten (3) für die Rotation einer Antriebsrolle (2) des genannten kontinuierlichen Förderbands (1 );
- eine Wasserpumpe (p), die Wasser aus dem Waschbehälter (A') zu
- einer Waschvorrichtung (7) pumpt, die über besagtem Kotbehälter (B) liegt.

## Revendications

1. Une toilette autonettoyante automatique pour animaux domestique qui comprend une zone de défécation pour recevoir l'animal comprenant:
- une surface qui reçoit les fèces, ayant la forme d'un convoyeur à bande continue (1);
- un récipient pour fèces (B) avec moyens d'évacuation pour fèces et liquide (a),
- un moyen mécanique détachant les excréments (8), pour balayer la surface qui reçoit les fèces (1) par un mouvement relatif entre la surface qui reçoit les fèces (1) et le respectif moyen détachant (8),
- moyen lavant (a-7, 7', ...) pour laver les fèces de dite surface qui reçoit les fèces,
- la disposition étant de telle manière que dit mouvement relatif est provoqué en même temps que la respective action lavante de dit moyen lavant (a-7....),
caractérisé par le fait que dit moyen détachant comprend au moins un fil métallique transversal détachant (8) qui est appliqué au dit convoyeur à bande continue (1) sur une portion de direction descendante du dit convoyeur à bande placé vers le bas de dite surface recevant les fèces, de façon à ce que dit fil métallique provoque le détachement des fèces pendant le lavage, pour provoquer la descente des fèces dans le dit récipient pour fèces (B).

2. Une toilette autonettoyante automatique pour les animaux domestique comme revendiqué à la revendication **1.**, caractérisée par le fait que:
- dit convoyeur à bande (1) est supporté par trois moyens supportants roulants qui forment un circuit triangulaire, les trois côtés étant:
. le premier s'étendant généralement horizontalement, pour constituer dite surface qui reçoit les fèces et
. le deuxième, dite portion de direction descendante;
. le respectif coin d'en bas avec les respectifs rouleaux (r) étant immergés dans un récipient extractible intermédiaire (C).

3. Une toilette autonettoyante automatique pour les animaux domestique comme revendiqué à la revendication **1.**, caractérisée par le fait que:
- dit convoyeur à bande (1) comprend ultérieurement un moyen brossant (8') vers le bas de dit fil métallique transversal détachant (8), pour brosser la surface de dite ceinture (1) sous sa rotation, étant dit moyen brossant (8') immergé dans le liquide lavant (C) de dit récipient extractible intermédiaire.

4. Une toilette autonettoyante automatique pour les animaux domestique comme revendiqué à la revendication **1.**, caractérisée par le fait qu'elle comprend:
- un réservoir à eau (A') sous dite surface recevant les fèces (A);
- et vers le bas de dit récipient pour fèces (B);
- un récipient pour sédimentations (solides résiduels) intermédiaire extractible (C),
- une chambre sèche séparée (D) contenant:
- appareils motorisés et électriques (3) pour faire tourner un rouleau entraîneur (2) de dite ceinture continue (1)
- un moyen de pompage d'eau (p) pour pomper l'eau du récipient lavant (A') dans
- un dispositif lavant (7) placé sur dit récipient qui reçoit les fèces (B).
